(19) Europäisches Patentamt
European Patent Office
Office européen des brevets

(11) **EP 1 601 037 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(51) Int Cl.:
***H01M 8/10*** (2006.01)   ***H01M 4/86*** (2006.01)
***H01M 8/04*** (2006.01)

(21) Anmeldenummer: **04012745.8**

(22) Anmeldetag: **28.05.2004**

(54) **Membran-Elektroden-Einheit für Direkt-Methanol-Brennstoffzellen (DMFC)**

Membrane electrode assembly for direct methanol fuel cell (DMFC)

Membrane-électrode-assemblage pour pile à combustible à alimentation directe en méthanole (DMFC)

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**30.11.2005 Patentblatt 2005/48**

(73) Patentinhaber: **Umicore AG & Co. KG**
**63457 Hanau-Wolfgang (DE)**

(72) Erfinder:
- **Köhler, Joachim, Dr.**
**63584 Gründau (DE)**
- **Wittpahl, Sandra**
**91074 Herzogenaurach (DE)**
- **Dziallas, Holger, Dr.**
**63538 Grosskrotzenburg (DE)**
- **Eickes, Christian, Dr.**
**60431 Frankfurt am Main (DE)**

(56) Entgegenhaltungen:
EP-A- 1 365 464     EP-A- 1 403 949
WO-A-02/41433       WO-A-2004/091024
WO-A-2004/093231    US-A- 5 599 638
US-B1- 6 187 467    US-B1- 6 221 523
US-B1- 6 296 964

**Beschreibung**

Die Erfindung betrifft eine Membran-Elektroden-Einheit für elektrochemische Vorrichtungen, insbesondere für Direkt-Methanol-Brennstoffzellen (engl. "Direct methanol fuel cells", DMFC). Die neue Membran-Elektroden-Einheit enthält Backings (d.h. Gasverteilersubstrate) auf der Anoden- und Kathodenseite, die eine unterschiedliche Wasserdichtheit (WD) aufweisen. Sie sind vorzugsweise für den Einsatz in Direkt-Methanol-Brennstoffzellen geeignet, die mit verdünnten, wässrigen Methanol-Lösungen und Luft betrieben werden.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, ein wasserstoffreiches Gas oder Methanol, als Oxidationsmittel Sauerstoff oder Luft dienen. Der Vorgang der Energieumwandlung in der Brennstoffzelle zeichnet sich durch einen besonders hohen Wirkungsgrad aus. Die Technologie der Brennstoffzellen ist in der Literatur ausführlich beschrieben, siehe K. Kordesch und G. Simader, "Fuel Cells and their Applications", VCH Verlag Chemie, Weinheim, 1996.

Die Direkt-Methanol-Brennstoffzelle eignet sich aufgrund ihrer niedrigen Betriebstemperatur, ihrer kompakten Bauweise und ihrer Leistungsdichte insbesondere für portable Einsatzbereiche, z.B. als Ersatz für Akkus und Batterien. Ein Brennstoffzellenstapel besteht aus einer stapelweisen Anordnung ("Stack") von einzelnen Brennstoffzellen, welche wiederum Membran-Elektroden-Einheiten enthalten, zwischen denen sogenannte bipolare Platten zur Gaszufuhr und Stromleitung angeordnet sind. Zur Erzielung einer bestimmten Zellspannung können eine Vielzahl von Einzel-Brennstoffzellen hintereinandergestapelt werden. Ein Überblick über den aktuellen Stand der DMFC-Technologie findet sich bei R. Dillon, S. Srinivasan, A.S. Arico und V. Antonucci, J. Power Sources 127 (2004) 112-126.

In der DMFC werden Methanol und Wasser (bzw. eine wäßrige Methanol-Lösung) direkt zu Kohlendioxid ($CO_2$), Wasser und elektrischem Strom umgesetzt. Wird flüssige Methanol-Lösung eingesetzt, spricht man von einer "liquid feed"-Anordnung. Die entsprechenden Reaktionen in der DMFC sind wie folgt:

| Anode: | $CH_3OH + H_2O$ | $\rightarrow$ | $CO_2 + 6H^+ + 6\,e\text{-}$ |
|---|---|---|---|
| Kathode: | $3/2\,O_2 + 6H^+ + 6\,e\text{-}$ | $\rightarrow$ | $3\,H_2O$ |
| Gesamtreaktion: | $CH_3OH + 3/2\,O_2$ | $\rightarrow$ | $CO_2 + 2\,H_2O$ |

Das Kernstück einer DMFC-Brennstoffzelle ist die sogenannte Membran-Elektroden-Einheit ("MEE"). Die MEE besteht aus fünf Lagen: aus der protonenleitenden Membran (Polymerelektrolyt- oder Ionomermembran) in der Mitte, aus den beiden Gasverteilersubstraten (auch als Gasdiffusionslagen, engl. "gas diffusion layers", GDLs oder "Backings" bezeichnet) an den Membranseiten, sowie den zwischen der Membran und den Gasverteilersubstraten liegenden Elektrodenschichten. Eine der Elektrodenschichten ist als Anode für die Oxidation von Methanol und die andere als Kathode für die Reduktion von Sauerstoff ausgebildet.

Die Backings bzw. Gasverteilersubstrate bestehen aus porösen, elektrisch leitfähigen Materialien wie beispielsweise Metallnetze, Metallgitter, graphitierte oder carbonisierte Kohlefaserpapiere, Kohlefaservliese oder Kohlefasergewebe. Die Backings ermöglichen einen guten Zugang der Reaktanten zu den Elektroden und eine gute Ableitung des Zellenstroms. Sie sind häufig mit Hydrophobierungsmitteln (z.B. wasserabstoßenden Fluorpolymeren wie PTFE, PVDF oder FEP) behandelt.

Weiterhin besitzen die Backings in der Regel auf einer Seite (meist auf der Seite, die der Elektrodenschicht zugewandt ist) eine sogenannte Ausgleichsschicht bzw. "Microlayer", bestehend z.B. aus einem Ruß/PTFE-Gemisch. Diese Microlayer liegt zwischen der Backing-Oberfläche und der Elektrodenschicht und besitzt typischerweise eine Schichtdicke von ca. 5 bis 50 micron.

Zur Abdichtung und zur besseren Handhabung der Membran-Elektroden-Einheit (MEE) beim Einbau in den Brennstoffzellenstapel kann diese weiterhin Dichtungsmaterialien, Schutzfilme, Verstärkungen und/oder Randeinfassungen aufweisen.

Die ionenleitende Membran besteht aus protonenleitenden Materialien, sogenannten Ionomeren. Bevorzugt wird ein Tetrafluorethylen-Fluorvinylether-Copolymer mit Säurefunktionen, insbesondere Sulfonsäuregruppen, verwendet, das unter dem Namen Nafion® von DuPont vertrieben wird. Es sind jedoch auch andere, insbesondere fluorfreie Ionomermaterialien, wie sulfonierte Polyetherketone, sulfonierte Polyarylketone, dotierte Polysulfone und dotierte Polybenzimidazole, aber auch anorganische Ionomere verwendbar. Geeignete ionenleitende Membranen sind von O. Savadogo in "Journal of New Materials for Electrochemical Systems" I, 47-66 (1998) beschrieben. Membranen, die einen reduzierten MeOH-Durchtritt ("cross-over") aufweisen, finden bevorzugt für die DMFC Verwendung.

Die Elektrodenschichten für Anode bzw. Kathode der DMFC enthalten Elektrokatalysatoren, welche die jeweilige Reaktion (Oxidation von Methanol beziehungsweise Reduktion von Sauerstoff) katalytisch unterstützen. Als katalytisch aktive Komponente wird auf der Anode bevorzugt ein bimetallischer Platin/Ruthenium-Katalysator, auf der Kathodenseite vorzugsweise ein Platinkatalysator eingesetzt. Darüberhinaus können die Katalysatoren Edelmetalle wie Palladium, Rhodium, Gold oder Kombinationen davon beinhalten. Häufig verwendet man sogenannte Trägerkatalysatoren (PtRu/C- bzw. Pt/C-Katalysatoren) bei denen die katalytisch aktiven Platingruppenmetalle in hochdisperser Form auf die Oberfläche eines leitfähigen Trägermaterials, beispielsweise Ruß, aufgebracht wurden. Es können aber auch ungeträgerte Pt- und PtRu-Pulver (sog. Pt- oder PtRu-Mohre) verwendet werden. Geeignete PtRu-Katalysatoren sind beispielsweise in EP 880 188 B1, EP 924 784 B1 sowie in EP 1 266 687 A1 beschrieben. Bisher liegen die Edelmetallbeladungen einer DMFC-MEE auf der Anode bei etwa 6 bis 14 mg PtRu/cm$^2$, auf der Kathode bei etwa 1 bis 6 mg Pt/cm$^2$.

Für den breiten kommerziellen Einsatz von DMFC-Brennstoffzellen im portablen Bereich ist eine weitere Verbesserung der elektrischen Leistungsdichte sowie eine deutliche Verminderung der Systemkosten notwendig. Die großen Probleme bei der Entwicklung der DMFC Brennstoffzellen-Technologie sind daher

- die bisher zu niedrige Leistungsdichte ("power density" P, W/cm$^2$),
- der Durchtritt des Methanols durch die Membran an die Kathodenseite ("MeOH crossover") sowie
- die hohe Beladung mit edelmetallhaltigen Katalysatoren

Zur Lösung dieser Probleme werden gegenwärtig weltweit erhebliche Forschungsanstrengungen unternommen. Der aktuelle Stand der Technik ist nachfolgend zusammengefasst:

Die US 5,599,638 beschreibt eine liquid-feed DMFC. Dabei werden Gasverteilersubstrate bzw. Backings verwendet, die mit einem Ionomer (vorzugsweise Nafion®) imprägniert sind, typische Anteile des Imprägnierungsmittels liegen bei 2 bis 10 Gew.% des Gasverteilersubstrates.

Die US 6,187,467 offenbart ebenfalls eine Imprägnierung eines Backings mit Nafion® zur Verwendung in einer DMFC. Der Elektrokatalysator wird allerdings nachträglich auf das imprägnierte Backing aufgebracht.

In der US 6,221,523 wird die direkte Beschichtung der Ionomermembran mit Katalysator zur Herstellung von MEEs beschrieben. Beide Elektrodenschichten (sowohl die Anodenschicht als auch die Kathodenschicht) sind in direktem Kontakt mit der Membran. Erst anschließend werden die Gasverteilersubstrate angebracht, welche keine Katalysatorbeschichtung besitzen.

In der US 6,296,964 wird vorgeschlagen, zur Reduktion der MeOH-Durchlässigkeit speziell dickere und/oder weniger poröse Anodenbackings zu verwenden. Ausserdem werden besondere Verteilerplatten für die Anodenseite beschrieben.

Die WO 02/41433 beschreibt eine luftatmende, passive DMFC, die ein hydrophiles Anodenbacking und ein hydrophobes Kathodenbacking besitzt. Ziel ist dabei, im unbefeuchteten Betrieb den Wasserverlust der Zelle zu minimieren und damit die Leistung zu verbessern. Das hydrophobe Kathodenbacking wird durch Imprägnieren mit PTFE hergestellt und drückt das Reaktionswasser aufgrund von Kapillarkräften zurück zur Anode, die es aufgrund ihrer hydrophilen Eigenschaften speichert. Die hydrophilen Eigenschaften der Anode werden durch Imprägnieren mit Nafion® eingestellt.

Die im Stand der Technik beschriebenen Massnahmen und Vorschläge führen zwar zu Leistungsverbesserungen, diese sind jedoch für den kommerziellen Einsatz der DMFC (z.B. als Ersatz für die Li-Ionenbatterie in Note-Books) noch nicht ausreichend.

Es war daher Aufgabe der vorliegenden Erfindung, weitere Verbesserungen der DMFC zu erreichen. Insbesondere sollten fünflagige Membran-Elektroden-Einheiten (MEEs) für Direkt-Methanol-Brennstoffzellen (DMFC) bereitgestellt werden, die eine hohe Leistungsdichte bei gleichzeitig reduziertem Edelmetallverbrauch aufweisen. Diese Aufgabe wird durch die Bereitstellung einer Membran-Elektroden-Einheit gemäß Anspruch 1 gelöst. In den Unteransprüchen werden vorteilhafte Ausführungsformen beschrieben.

Im Gegensatz zur WO 02/41433 wurde gefunden, dass die hydrophilen bzw. hydrophoben Eigenschaften eines Backings für eine Leistungsverbesserung in der DMFC allein nicht ausschlaggebend sind. Auch ein hoher bzw. niedriger Gehalt an Hydrophobierungsmittel ist nicht allein entscheidend. Vielmehr wirken verschiedene Parameter zusammen, insbesondere sind neben dem Gehalt an Hydrophobierungsmittel das Gesamtporenvolumen ($V_{Ges}$) sowie das Vorhandensein einer Ausgleichsschicht (Microlayer) für die Eignung des Backings von massgeblichem Einfluß. Weitere wichtige Faktoren sind der Backingtyp (z.B. gewebtes oder ungewebtes Material), die Materialoberfläche, die Substratdichte sowie die Schichtdicke der Katalysatorschicht auf dem Backing.

Bei den Arbeiten hat sich überraschenderweise gezeigt, dass die erfindungsrelevanten Eigenschaften des Backings am besten mit Hilfe des Parameters der "Wasserdichtheit" (WD) beschrieben werden können. Diese relative Größe ist aus der Textilindustrie bekannt, wobei eine genormte Bestimmungsmethode vorliegt (DIN EN 20811). Durch die Einführung dieses Parameters wird es erst möglich, die vorliegende Erfindung in ausreichender Weise zu definieren.

Es wurde nämlich festgestellt, dass die Leistung einer Membran-Elektroden-Einheit (MEE) für DMFC deutlich erhöht wird, wenn auf der Anoden- und der Kathodenseite Backings mit unterschiedlicher Wasserdichtheit ("WD") zum Einsatz kommen. Insbesondere muss auf der Anodenseite ein Backing verwendet werden, das eine geringe Wasserdichtheit (und damit eine hohe Wasserdurchlässigkeit) besitzt, während auf der Kathodenseite ein Backing mit hoher Wasserdichtheit (und damit eine geringe Wasserdurchlässigkeit) eingesetzt werden muss. Diese spezielle Kombination von Backings mit unterschiedlicher Wasserdichtheit führt zu einer erheblichen Leistungsverbesserung der DMFC-MEE. Im Vergleich zur umgekehrten Backing-Kombination kann die Leistungsdichte (P in W/cm$^2$) um mehr als den Faktor 2 verbessert werden. Der beobachtete Effekt ist besonders auffällig beim Betrieb der DMFC mit verdünnten wäßrigen Methanollösungen (in Konzentrationsbereichen von 0,01 bis 5 Mol/l), wobei die Durchflussraten vorzugsweise bei etwa 1 bis 10 ml MeOH/min liegen. Die "Wasserdichtheit" (WD) wird gemäß DIN EN 20811 in einem hydrostatischen Druckversuch bestimmt.

Die Anodenbackings mit geringer Wasserdichtheit (d.h. hoher Wasserdurchlässigkeit) weisen vorzugsweise ein hohes Gesamtporenvolumen ($V_{Ges}$) auf. Sie dürfen nur einen geringen Gehalt an Hydrophobierungsmittel besitzen. Bevorzugt enthalten die Backings keine Ausgleichsschicht (Microlayer). Das Gesamtporenvolumen des erfindungsgemäßen Anodenbackings ($V_{Ges})_{Anode}$ liegt im Bereich von 2,5 bis 4,5 ml/g. Der Gehalt an Hydrophobierungsmittel liegt im Bereich von 2 bis 10 Gew.% (bezogen auf das Gesamtgewicht).

Die Kathodenbackings zeigen eine hohe Wasserdichtheit (bzw. geringe Wasserdurchlässigkeit), besitzen vorteilhafterweise eine Ausgleichsschicht (Microlayer) und weisen ein niedrigeres Gesamtporenvolumen ($V_{Ges})_{Kathode}$ auf, das im Bereich von 0,5 bis 2,5 ml/g liegt. Kathodenbackings besitzen einen höheren Gehalt an Hydrophobierungsmittel im Bereich von 10 bis 30 Gew.%, vorzugsweise im Bereich von 10 bis 20 Gew.% (bezogen auf das Gesamtgewicht).

Die erfindungsgemäße fünflagige Membran-Elektroden-Einheit (MEE) für Direkt-Methanol-Brennstoffzellen enthält eine ionenleitende Membran, mindestens eine Anoden-Elektrodenschicht, mindestens eine Kathoden-Elektrodenschicht, ein auf der Anodenseite angebrachtes Anodenbacking sowie ein auf der Kathodenseite angebrachtes Kathodenbacking, wobei das Anodenbacking eine geringere Wasserdichtheit WD als das Kathodenbacking aufweist.

Die Elektrodenschichten auf Anoden- bzw. Kathodenseite der MEE können entweder direkt auf der Ionomermembran aufgebracht sein ("CCM"-Technologie) oder sich auf dem jeweiligen Backing befinden ("CCB"-Technologie). Auch Mischformen sind möglich, bei denen sich eine Elektrodenschicht auf dem Backing, die andere auf der Membran befindet (vgl. hierzu DE-Patentanmeldung DE 103 25 324.6). Entscheidend für die Leistungsverbesserung der erfindungsgemäßen MEE ist die spezielle Kombination von Anoden- und Kathodenbackings.

Die Messung der Porosität wird mit Hilfe der Quecksiber-Porosimetrie nach DIN 66133 durchgeführt. Die Hg-Porosimetrie ermöglicht die Bestimmung des Gesamtporenvolumens ($V_{Ges}$) in porösen Festkörpern ab einer Porengröße von etwa 2 nm. Erfasst werden dabei die Mikroporen (Porendurchmesser grösser 50 nm) sowie die Mesoporen (Porendurchmesser im Bereich 2 bis 50 nm). Die Methode liefert einen integralen Wert für $V_{Ges}$ über den gesamten Porengrößenbereich.

Die Bestimmung der Wasserdichtheit (WD) lässt sich über den hydrostatischen Druckversuch gemäß DIN EN 20 811 durchführen. Dabei ist die Wasserdichtheit umgekehrt proportional zur Wasserdurchlässigkeit. Eine hohe Wasserdichtheit des Gasverteilersubstrates bedeutet daher, dass das Backing eine geringe Wasserdurchlässigkeit besitzt und einen Wasserdurchtritt verzögert bzw. behindert.

Die Wasserdichtheit wird beurteilt nach der hydrostatischen Druckhöhe, den ein textiles Flächengebilde dem Durchdringen des Wassers entgegensetzt. Eine Probe mit einer Fläche von 100 cm$^2$ wird unter Normalbedingungen einem stetig steigendem Wasserdruck auf einer Seite ausgesetzt, bis an drei Stellen eine Durchdringung erfolgt. Der hydrostatische Druck, bei dem das Wasser die Probe durchdringt, entspricht dem Meßwert. Die Prüfung wird mit destilliertem Wasser bei einer Wassertemperatur von $(20 \pm 2)°C$ durchgeführt. Die Steigungsgeschwindigkeit des Wasserdrucks beträgt 10 +- 0,5 cm Wassersäule/min. Dies steht in Beziehung zum Druck in Millibar (1 cm Wassersäule ~ 1 mbar). Das in diesem Testverfahren erhaltene Ergebnis entspricht sehr gut dem Verhalten von dünnen Flächengebilden (wie z.B. von Kohlefaservliesen) in einer DMFC-Einzelzelle, wenn sie einem Wasserdruck ausgesetzt werden.

Die Ergebnisse dieser Messungen sind daher auf das Verhalten der Backings in DMFC-Brennstoffzellen übertragbar. Backings mit geringer Wasserdichtheit (d.h. hoher Wasserdurchlässigkeit) zeigen niedrige Druckwerte im Bereich von 2 bis 20 mbar, Substrate mit hoher Wasserdichtheit (d.h. geringer Wasserdurchlässigkeit) weisen höhere Druckwerte im Bereich von 20 bis 50 mbar auf.

Wie bereits beschrieben, werden in der DMFC-Brennstoffzelle besonders gute Leistungswerte erzielt, wenn die Anoden-Backings eine geringere Wasserdichtheit als die Kathoden-Backings besitzen. Damit lassen sich für die erfindungsgemäßen Membran-Elektroden-Einheiten in Hinblick auf die Wasserdichtheit (WD; in mbar) und den Quotienten C die folgenden Bedingungen aufstellen:

$$WD_{Anode} \quad < \quad WD_{Kathode} \qquad (1)$$

und weiterhin

4

$$C = WD_{Anode} / WD_{Kathode} < 1 \qquad (2)$$

Typische Werte für den Quotienten C liegen im Bereich von 0,01 bis 0,99 vorzugsweise im Bereich von 0,4 bis 0,9.

Die Membran-Elektroden-Einheit mit der erfindungsgemäßen Backing-Kombination zeigt in der Regel eine Verbesserung der Leistungsdichte (P; in mW/cm$^2$) um mehr als den Faktor 2 gegenüber MEEs mit der umgekehrten Anordnung der Backings (vgl hierzu <u>Tabelle 1).</u> Die beschriebenen Verbesserungen der DMFC sind dabei weitgehend unabhängig vnm Typ der eingesetzten Elektrokatalysatoren und der Ionomermembranen. Auch die Betriebsbedingungen der DMFC-Brennstoffzelle (Stöchiometrie, Temperatur, Durchflußraten etc) sind grundsätzlich ohne grossen Einfluß.

Die Ursachen dieser Leistungsverbesserung sind noch nicht vollständig verstanden. Eine mögliche Erklärung besteht darin, dass durch die geringe Wasserdichtheit (bzw. die höhere Wasserdurchlässigkeit) des Anodenbackings eine verbesserte Wechselwirkung der MeOH-Lösung mit den katalytisch aktiven Zentren der Anodenelektrodenschicht stattfinden kann. Die erfindungsgemäßen Anodenbackings ermöglichen eine schnelle Diffusion der wässrigen Methanol-Lösung, eine gute Abtrennung des entstehenden Kohlendioxids sowie einen guten Kontakt der Reaktanten zur Ionomermembran. Gleichzeitig verhindert die gute Wasserdichtheit des Kathodenbackings eine zu schnelle Austrocknung der MEE. Jedoch sind auch andere Erklärungen möglich.

Der Gesamtgehalt an Hydrophobierungsmittel liegt für Anodenbackings im Bereich von 3 bis 10 Gew.% und für Kathodenbackings im Bereich von 10 bis 30 Gew.% (jeweils bezogen auf das Gesamtgewicht). Die Hydrophobierung kann mit allen bekannten Verfahren durchgeführt werden. Gängig ist das Verfahren, wobei eine handelsübliche Teflondispersion mit destilliertem Wasser gemischt wird und die Kohlefaserpapiere dann in die hergestellte Dispersion eingetaucht werden. Dann wird das beschichtete Kohlefaserpapier in einem Trockenofen getrocknet. Zum Verschmelzen/Sintern des aufgebrachten PTFEs können die hydrophobierten Backings in einem Trockenofen bei über 300°C gesintert werden. Der Gehalt an Hydrophobierungsmittel wird in der Regel gravimetrisch, d.h. durch Wiegen des Backings vor und nach der Hydrophobierung bestimmt.

Nach der Hydrophobierung erfolgt die Beschichtung des Kathoden-Backings mit einer Ausgleichsschicht. Die Microlayer bzw. Ausgleichsschicht enthält in der Regel leitfähigen Ruß und PTFE in beliebigen Zusammensetzungen. Sie kann mit gängigen Beschichtungsverfahren aufgebracht werden, beispielsweise durch Rakel- oder Siebdruck. Hierfür werden Backing-Tinten hergestellt, die zur Einstellung der Porosität neben Lösungsmitteln auch verschiedene Porenbildner enthalten können. Aufgrund des zusätzlichen Anteils an PTFE in der Microlayer weisen die Kathodenbackings einen höheren Gesamtgehalt an Hydrophobierungsmittel auf (10 bis 30 Gew.%; bezogen auf das Gesamtgewicht). Der Gesamtgehalt wird in diesem Fall ebenfalls gravimetrisch aus der Gewichtszunahme des Backings nach Aufbringen der Microlayer bestimmt, wobei der PTFE-Anteil an der Backing-Tintenrezeptur rechnerisch berücksichtigt wird. Die Microlayer hat meist eine Schichtdicke von 5 bis 30 micron, bevorzugt 10 bis 20 micron.

Die Beschichtung der Anoden- bzw. Kathodenbackings mit Elektrokatalysatoren erfolgt unter Verwendung von Katalysatortinten mit Hilfe gängiger Beschichtungsverfahren (beispielsweise Siebdruck, Sprühverfahren, Rakeln etc). Nach der Beschichtung werden die Backingsubstrate zur Entfernung der Lösungsmittelanteile getrocknet.

Die nachfolgenden Beispiele sollen die Erfindung näher erläutern.

## BEISPIELE

### Beispiel 1

<u>Erfindungsgemäße Membran-Elektroden-Einheit (WD$_{Anode}$ < WD$_{Kathode}$)</u>

<u>a) Herstellung, des Anodenbackings:</u> Die Katalysatortinte für die Anode, bestehend aus einem PtRu/C-Trägerkatalysator (80 Gew.% Pt auf Ruß, 52,8 Gew.% Pt, 27,2 Gew.% Ru; Fa. Umicore), Nafion®-Dispersion (10 Gew.-% in Wasser) und einem organischen Lösungsmittel (Dipropylenglykol), wird mittels Siebdruck auf ein Backingsubstrat (Typ Sigracet 30 BA; Fa. SGL Carbon AG, Meitingen; Gehalt an Hydrophobierungsmittel 5 Gew.%; keine Microlayer) aufgebracht, dessen Wasserdichtheit WD (gemessen nach DIN EN 20811) einem hydrostatischem Druck von 19 mbar entspricht. Die Edelmetallbeladung dieses so hergestellten Anoden-Backings beträgt 4 mg PtRu/cm$^2$ ( = 2,64 mg Pt/cm$^2$ und 1,36 mg Ru/cm$^2$); seine aktive Fläche beträgt 50 cm$^2$.

<u>b) Herstellung des Kathodenbackings:</u> Die Katalysatortinte für die Kathode, bestehend aus einem Pt-Trägerkatalysator (60 Gew.-% Pt auf Ruß, Fa. Umicore), Nafion® -Dispersion (10 Gew.-% in Wasser, Fa. DuPont) und einem organischen Lösungsmittel (Dipropylenglykol), wird mittels Siebdruck auf ein Backingsubstrat (Typ Sigracet 30 BC; Fa. SGL Carbon AG; Gehalt an Hydrophobierungsmittel 11,5 Gew.%; mit Microlayer) aufgebracht, dessen Wasserdichtheit WD (gemessen nach DIN EN 20811, s.o.) einem hydrostatischen Druck von 41 mbar entspricht. Die Beladung dieses so hergestellten Kathodenbackings liegt bei 2 mg Pt/cm$^2$, seine aktive Fläche ist 50 cm$^2$.

<u>c) Herstellung der Membran-Elektroden-Einheit:</u> Im nächsten Arbeitsschritt werden die beiden Backings auf die gegenüberliegenden Seiten einer Ionomermembran (Nafion® N117, Fa. DuPont) auflaminiert und die resultierende fünflagige Membran-Elektroden-Einheit in eine DMFC-Brennstoffzelle eingebaut. Die eingesetzten Backings entsprechen der Beziehung

$$WD_{Anode} < WD_{Kathode}$$

mit

$$C = WD_{Anode} / WD_{Kathode} = 0,46 .$$

Die Gesamtedelmetallbeladung der MEE beträgt 6 mg Edelmetall/cm$^2$. Man erhält sehr gute Leistungswerte, die mehr als den Faktor 2 über denjenigen der Vergleichsbeispiele liegen. Testbedingungen und Ergebnisse sind in <u>Tabelle 1</u> zusammengefasst.

**Vergleichsbeispiel 1 (VB 1)**

<u>Membran-Elektroden-Einheit mit Backings, die gleiche Wasserdichtheit besitzen (WD$_{Anode}$= WD$_{Kathode}$)</u>

Die Herstellung des Anodenbackings erfolgt grundsätzlich wie in Beispiel 1 beschrieben, jedoch wird als Backingsubstrat der Typ Sigracet 30 BC (Fa. SGL) eingesetzt. Der Gehalt an Hydrophobierungsmittel beträgt 11,5 Gew.%, eine Microlayer ist vorhanden. Die Wasserdichtheit WD (gemessen nach DIN EN 20811, s.o.) entspricht einem hydrostatischem Druck von 41 mbar. Die Edelmetallbeladung dieses so hergestellten Anodenbackings beträgt 4 mg PtRu/cm$^2$ (= 2,64 mg Pt/cM$^2$ und 1,36 mg Ru/cm$^2$).

Die Herstellung des Kathodenbackings erfolgt wie in Beispiel 1 beschrieben. Auch hier wird als Backingmaterial Sigracet 30 BC (die Wasserdichtheit WD entspricht 41 mbar) eingesetzt. Im nächsten Arbeitsschritt werden die beiden Backings auf die gegenüberliegenden Seiten einer Ionomermembran (Nafion® N117, Fa. DuPont) auflaminiert und die resultierende fünflagige Membran-Elektroden-Einheit in eine DMFC-Einzelzelle eingebaut. Die aktive Zellfläche liegt bei 50 cm$^2$. Die eingesetzten Backings entsprechen der Beziehung

$$WD_{Anode} = WD_{Kathode}$$

mit

$$C = WD_{Anode} / WD_{Kathode} = 1 .$$

Die erhaltenen Leistungswerte liegen deutlich unter denen des erfindungsgemäßen Beispiels 1. Testbedingungen und Ergebnisse sind in <u>Tabelle 1</u> zusammengefasst.

**Vergleichsbeispiel 2 (VB 2)**

<u>Membran-Elektroden-Einheit mit Backings, die unterschiedliche Wasserdichtheit besitzen (WD$_{Anode}$ < W$_{Kathode}$)</u>

Die Herstellung des Anodenbackings erfolgt wie in Beispiel 1 beschrieben, jedoch wird als Backingsubstrat Sigracet 30 BC (Fa. SGL; Gehalt an Hydrophobierungsmittel 11,5 Gew.%; mit Microlayer). Die Wasserdichtheit WD entspricht einem hydrostatischen Druck von 41 mbar. Die Edelmetallbeladung beträgt 4 mg PtRu/cm$^2$ .

Die Herstellung des Kathodenbackings erfolgt wie in Beispiel 1 beschrieben, jedoch wird als Backingmaterial Sigracet 30 BA (Fa. SGL, Gehalt an Hydrophobierungsmittel 5 Gew.%; ohne Microlayer) eingesetzt. Die Wasserdichtheit WD entspricht einem hydrostatischem Druck von 19 mbar.

Im nächsten Arbeitsschritt werden die beiden Backings auf die gegenüberliegenden Seiten einer Ionomermembran (Nafion® N117, Fa. DuPont) auflaminiert und die resultierende fünflagige Membran-Elektroden-Einheit in eine DMFC-Einzelzelle mit 50 cm$^2$ aktiver Zellfläche eingebaut. Die eingesetzten Backings entsprechen der Beziehung

$$WD_{Anode} > WD_{Kathode}$$

mit

$$C = WD_{Anode} / WD_{Kathode} = 2,16.$$

Die erhaltenen DMFC-Leistungswerte liegen deutlich unter denen des erfindungsgemäßen Beispiels 1. Testbedingungen und Ergebnisse sind in <u>Tabelle 1</u> zusammengefasst.

**ELEKTROCHEMISCHE PRÜFUNGEN**

Die elektrochemischen Prüfungen erfolgen in einer DMFC-Einzelzelle mit einer aktiven Zellfläche von 50 cm$^2$. Auf der Anode wird eine 1-molare wässrige Methanol-Lösung, als Kathodengas wird Luft eingesetzt. Der MeOH-Durchfluß beträgt 3 ml/min; die Luftstöchiometrie liegt bei 2,5 @ 100 mA/cm$^2$. Die Zelltemperatur beträgt 70°C. Die gemessenen Zellspannungen sind beispielhaft für die Stromdichte von 280 mA/cm$^2$ in <u>Tabelle 1</u> zusammengefäßt. Man erkennt, dass die erfindungsgemäß hergestellte Membran-Elektroden-Einheit mit WD$_{Anode}$ < WD$_{Kathode}$ aus Beispiel 1 eine deutlich verbesserte elektrische Leistung im Vergleich zu der Vergleichsbeispielen (VB 1 und VB 2) liefert.

Tabelle 1:

| Vergleich von Zellspannung [mV] und Leistungsdichte [W/cm$^2$] der Membran-Elektroden-Einheiten (DMFC-Einzelzelle, 50 cm$^2$, Methanol/Luftbetrieb, Durchfluß 3 ml/min; Luftstöchiometrie 2,5 @ 100 mA/cm$^2$; Zelltemperatur 70°C, Stromdichte 280 mA/cm$^2$). | | | |
| --- | --- | --- | --- |
| Beispiele | C = WD$_{Anode}$ / WD$_{Kathode}$ | Zellspannung U [mV] @ 280 mA/cm$^2$ | Leistungsdichte P [mW/cm$^2$] |
| Beispiel 1 | C = 0,42 | 311 | 87 |
| Vergleichsbeispiel 1 (VB 1) | C = 1 | 147 | 41 |
| Vergleichsbeispiel 2 (VB 2) | C = 2,16 | 113 | 35 |

**Patentansprüche**

1. Membran-Elektroden-Einheit für Direkt-Methanol-Brennstoffzellen (DMFC), enthaltend eine ionenleitende Membran, mindestens eine Anoden-Elektrodenschicht, mindestens eine Kathoden-Elektrodenschicht, mindestens ein Anodenbacking sowie mindestens ein Kathodenbacking, wobei das Anodenbacking keine Ausgleichsschicht (Microlayer) aufweist und wobei das Kathodenbacking eine Ausgleichsschicht (Microlayer) besitzt und wobei das Anodenbacking ein höheres Gesamtporenvolumen V$_{Ges}$ (gemessen über Hg-Porosimetrie nach DIN 66133) als das Kathodenbacking aufweist und wobei der Gesamtgehalt an Hydrophobierungsmittel für das Anodenbacking im Bereich von 2 bis 10 Gew.-% und für das Kathodenbacking im Bereich von 10 bis 30 Gew.-% (jeweils bezogen auf das Gesamtgewicht) liegt.

2. Membran-Elektroden-Einheit nach Anspruch 1, wobei das Anodenbacking ein Gesamtporenvolumen V$_{Ges(Anode)}$ (gemessen über Hg-Porosimetrie nach DIN 66133) im Bereich von 2,5 bis 4,5 ml/g und das Kathodenbacking ein Gesamtporenvolumen V$_{Ges(Kathode)}$ im Bereich von 0,5 bis 2,5 ml/g aufweist.

3. Membran-Elektroden-Einheit nach Anspruch 1, wobei als Hydrophobierungsmittel wasserabstoßende Fluorpolymere wie PTFE, PVDF oder FEP verwendet werden.

4. Membran-Elektroden-Einheit nach Anspruch 1, wobei das Anoden- und/oder das Kathodenbacking aus porösen, elektrisch leitfähigen Materialien, beispielsweise aus Metallnetzen, Metallgittern, graphitierten oder carbonisierten Kohlefaserpapieren, Kohlefaservliese, Kohlefasergewebe oder Kombinationen davon besteht.

5. Membran-Elektroden-Einheit nach Anspruch 1, wobei die Anoden-Elektrodenschicht und die Kathoden-Elektrodenschicht auf der ionenleitenden Membran und/oder auf dem Anoden- bzw. Kathodenbacking aufgebracht sind.

6. Membran-Elektroden-Einheit nach Anspruch 1, wobei die Anoden-Elektrodenschicht und/oder die Kathoden-Elektrodenschicht katalytisch aktive, fein verteilte Edelmetalle wie beispielsweise Platin, Palladium, Rhodium, Ruthenium, Gold oder Kombinationen davon enthalten.

7. Membran-Elektroden-Einheit nach Anspruch 1, wobei die ionenleitende Membran organische Ionomere, wie fluorierte polymere Sulfonsäurederivate, sulfonierte Polyetherketone, sulfonierte Polyarylketone, dotierte Polysulfone, dotierte Polybenzimidazole und/oder organische Ionomere enthält.

8. Membran-Elektroden-Einheit nach Anspruch 1, weiterhin enthaltend Dichtungsmaterialien, Schutzfilme, Verstärkungsmaterialien und/oder Randeinfassungen.

9. Verwendung der Membran-Elektroden-Einheit nach einem der Ansprüche 1 bis 8 in Direkt-Methanolbrennstoffzellen (DMFC).

**Claims**

1. Membrane electrode assembly for direct methanol fuel cells (DMFCs), containing an ion-conducting membrane, at least one anode electrode layer, at least one cathode electrode layer, at least one anode backing and at least one cathode backing, wherein the anode backing has no compensating layer (microlayer) and wherein the cathode backing has a compensating layer (microlayer), and wherein the anode backing has a higher total pore volume $V_{tot}$ (measured using Hg porosimetry in accordance with DIN 66133) than the cathode backing, and wherein the total hydrophobising agent for the anode backing is in the range of 2 to 10 % w/w and for the cathode backing is in the range of 10 to 30 % w/w (based on the total weight in each case).

2. Membrane electrode assembly according to Claim 1, wherein the anode backing has a total pore volume $V_{tot(anode)}$ in the range of 2.5 to 4.5 ml/g (measured using Hg porosimetry in accordance with DIN 66133) and the cathode backing has a total pore volume $V_{tot(cathode)}$ in the range of 0.5 to 2.5 ml/g.

3. Membrane electrode assembly according to Claim 1, wherein hydrophobic fluoropolymers, such as PTFE, PVDF or FEP are utilised as the hydrophobing agent.

4. Membrane electrode assembly according to Claim 1, wherein the anode backing and/or the cathode backing consists of porous, electrically conductive materials, for example metal meshes, metal grilles, graphitised or carbonised carbon fibre papers, nonwoven carbon fibres, woven carbon fibres or combinations thereof.

5. Membrane electrode assembly according to Claim 1, wherein the anode electrode layer and the cathode electrode layer are attached to the ion-conducting membrane and/or the anode backing and cathode backing.

6. Membrane electrode assembly according to Claim 1, wherein the anode electrode layer and/or the cathode electrode layer contains catalytically active, finely dispersed precious metals, such as platinum, palladium, rhodium, ruthenium, gold or combinations thereof.

7. Membrane electrode assembly according to Claim 1, wherein the ion-conducting membrane contains organic ionomers, such as fluorinated polymeric sulphonic acid derivates, sulphonated polyether ketones, sulphonated polyaryl ketones, doped polysulphones, doped polybenzimidazoles and/or organic ionomers.

8. Membrane electrode assembly according to Claim 1, further containing sealants, protective films, reinforcing materials and/or edgings.

9. Use of the membrane electrode assembly according to any one of Claims 1 to 8 in direct methanol fuel cells (DMFCs).

**Revendications**

1. Unité membrane-électrode pour piles à combustible directes à méthanol (DMFC), contenant une membrane conductrice d'ions, au moins une couche d'électrode d'anode, au moins une couche d'électrode de cathode, au moins une couche arrière de diffusion de gaz de l'anode ainsi qu'au moins une couche arrière de diffusion de gaz de la cathode, la couche arrière de diffusion de gaz de l'anode ne présentant pas de couche de compensation (microcouche) et la couche arrière de diffusion de la cathode possédant une couche de compensation (microcouche) et la couche arrière de diffusion de l'anode présentant un volume total de pores $V_{Tot}$ (mesuré par porosimétrie au Hg selon la norme DIN 66133) supérieur à celui de la couche arrière de diffusion de la cathode et la teneur totale en agent d'hydrofugation pour la couche arrière de diffusion de l'anode se situant dans la plage de 2 à 10 % en poids et, pour la couche arrière de diffusion de la cathode, dans la plage de 10 à 30 % en poids (à chaque fois par rapport au poids total).

2. Unité membrane-électrode selon la revendication 1, la couche arrière de diffusion de l'anode présentant un volume total de pores $V_{Tot(Anode)}$ (mesuré par porosimétrie au Hg selon la norme DIN 66133) dans la plage de 2,5 à 4,5 ml/g et la couche arrière de diffusion de la cathode présentant un volume total de pores $V_{Tot(Cathode)}$ dans la plage de 0,5 à 2,5 ml/g.

3. Unité membrane-électrode selon la revendication 1, des polymères fluorés repoussant l'eau, tels que le PTFE, le PVDF ou le FEP, étant utilisés comme agent hydrofuge.

4. Unité membrane-électrode selon la revendication 1, la couche arrière de diffusion de l'anode et/ou la couche arrière de diffusion de la cathode étant constituée(s) de matériaux poreux, électriquement conducteurs, par exemple de filets métalliques, de grilles métalliques, de papiers graphités ou carbonisés en fibres de carbone, de non-tissés en fibres de carbone, de tissus en fibres de carbone ou de combinaisons de ceux-ci.

5. Unité membrane-électrode selon la revendication 1, la couche d'électrode d'anode et la couche d'électrode de cathode étant appliquées sur la membrane conductrice d'ions et/ou respectivement sur la couche arrière de diffusion de l'anode et la couche arrière de diffusion de la cathode.

6. Unité membrane-électrode selon la revendication 1, la couche d'électrode d'anode et/ou la couche d'électrode de cathode contenant des métaux nobles catalytiquement actifs, finement répartis, tels que par exemple le platine, le palladium, le rhodium, le ruthénium, l'or ou des combinaisons de ceux-ci.

7. Unité membrane-électrode selon la revendication 1, la membrane conductrice d'ions contenant des ions ionomères organiques, tels que des dérivés polymères fluorés de l'acide sulfonique, des polyéthercétones sulfonées, des polyarylcétones sulfonées, des polysulfones dopées, des polybenzimidazoles dopés et/ou des ionomères organiques.

8. Unité membrane-électrode selon la revendication 1, contenant en outre des matériaux d'étanchéité, des films de protection, des matériaux de renforcement et/ou des bordures.

9. Utilisation de l'unité membrane-électrode selon l'une quelconque des revendications 1 à 8 dans des piles à combustible directes à méthanol (DMFC).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 880188 B1
- EP 924784 B1
- EP 1266687 A1
- US 5599638 A
- US 6187467 B
- US 6221523 B
- US 6296964 B
- WO 0241433 A
- DE 10325324

**In der Beschreibung aufgeführte Nicht-Patentliteratur**

- **K. KORDESCH ; G. SIMADER.** Fuel Cells and their Applications. VCH Verlag Chemie, 1996
- **R. DILLON ; S. SRINIVASAN ; A.S. ARICO ; V. AN-TONUCCI.** *J. Power Sources,* 2004, vol. 127, 112-126
- **O. SAVADOGO.** *Journal of New Materials for Electrochemical Systems,* 1998, vol. I, 47-66